Europäisches Patentamt

European Patent Office

Office européen des brevets

(19)

(11) Numéro de publication: **0 237 433**
**B1**

(12) # FASCICULE DE BREVET EUROPEEN

(45) Date de publication du fascicule du brevet:
19.09.90

(51) Int. Cl.⁵: **H01Q 1/00**, G01S 7/40,
G01C 1/00, B64G 3/00

(21) Numéro de dépôt: **87400525.9**

(22) Date de dépôt: **10.03.87**

(54) **Ensemble d'étalonnage des angles d'élévation et d'azimut de l'axe radioélectrique d'une antenne.**

(30) Priorité: **11.03.86 FR 8603427**

(43) Date de publication de la demande:
**16.09.87 Bulletin 87/38**

(45) Mention de la délivrance du brevet:
**19.09.90 Bulletin 90/38**

(84) Etats contractants désignés:
**BE CH DE ES FR GB IT LI LU NL SE**

(56) Documents cités:
**EP-A- 0 007 831**
**DE-B- 1 616 709**
**FR-A- 2 486 662**
**US-A- 4 199 257**

**FUNKSCHAU, vol. 48, no. 2, janvier 1976, pages 59-60;**
**"Flug-Landesystem DLS in hartem Test"**
**IEEE INTERNATIONAL CONVENTION**
**RECORD 11, vol. 5, 25-28 mars 1963, pages 234-235,242,244; E.L. LADENHEIM: "Precision mount alignment by star fixes"**
**RAUMFAHRTFORSCHUNG,**
**vol. 16, no. 6, novembre/décembre 1972, pages 265-269; H. GÖSSL et al.: "Ein neues Interferometersystem mit nachführbaren Richtantennen für 136-138 MHz"**

(73) Titulaire: **CENTRE NATIONAL D'ETUDES SPATIALES (C.N.E.S.) Etablissement public, scientifique et, technique à caractère industriel et commercial 2, place Maurice-Quentin, F-75039 Paris Cédex 01(FR)**

(72) Inventeur: **Dardenne, Jean, 117, Avenue du Général Leclerc, F-91190 Gif sur Yvette(FR)**
Inventeur: **Deschamps, Patrick, 33, rue Emile Zola, F-31520 Ramonville(FR)**
Inventeur: **Marty, Jacques, Villate, F-31120 Portret(FR)**

(74) Mandataire: **Mongrédien, André et al, c/o BREVATOME 25, rue de Ponthieu, F-75008 Paris(FR)**

ACTORUM AG

## Description

La présente invention concerne un ensemble d'étalonnage des angles d'élévation et d'azimut de l'axe radioélectrique d'une antenne. Elle s'applique plus particulièrement à l'étalonnage des angles d'élévation et d'azimut de l'axe radioélectrique d'une antenne destinée à être pointée sur un satellite de type géostationnaire, occupant une position prédéterminée de l'espace, par rapport à un repère fixe de référence lié au sol portant l'antenne.

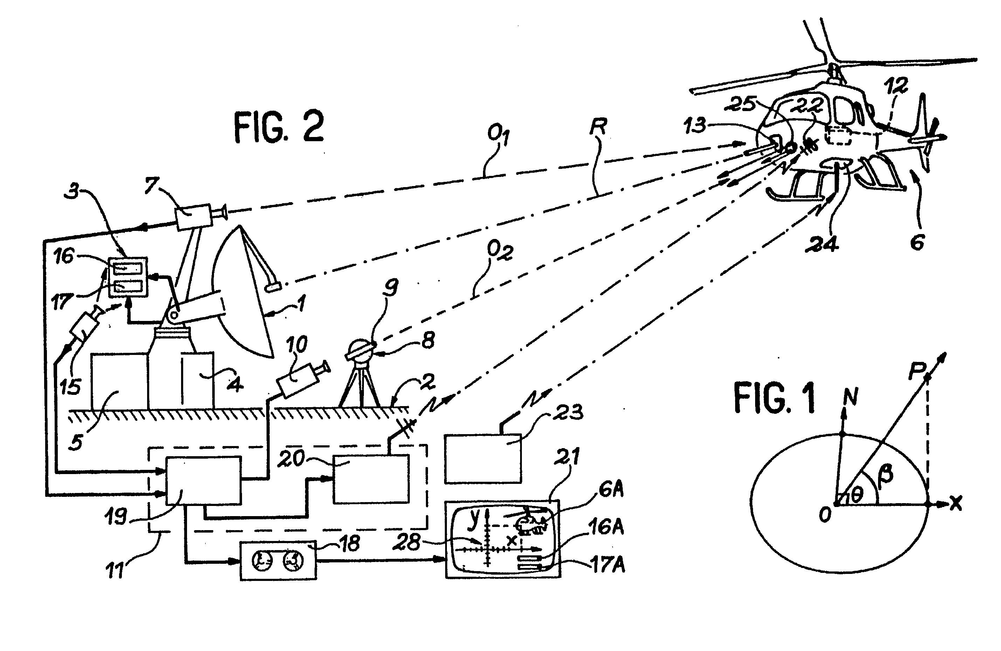

La figure 1 permet de mieux comprendre la définition des angles d'élévation et d'azimut d'un point P de l'espace, occupant une position prédéterminée, cette position étant observée d'un point O terrestre.

L'angle θ d'azimut d'un point P de l'espace observé d'un point O lié au sol est l'angle entre une direction ON de référence (par exemple la direction du nord géographique) et la droite OX d'intersection entre un plan vertical passant par P et par O et perpendiculaire au sol horizontal. L'angle d'élévation et l'angle entre la droite passant par O et par P, et la droite OX définie précédemment.

Différents procédés ou dispositis existent pour orienter l'axe radioélectrique d'une antenne avec une assez grande précision vers un point occupant, par rapport à un repère fixe de référence lié au sol, une position prédéterminée dans l'espace. Ces procédés ou dispositifs sont notamment utilisés pour pointer avec précision l'axe radioélectrique d'une antenne sur la position prédéterminée que doit occuper un satellite géostationnaire.

Différentes méthodes sont connues pour effectuer des mesures angulaires d'élévation et d'azimut d'un point de l'espace et pour orienter une antenne avec une assez bonne précision vers ce point de l'espace.

Les mesures angulaires d'élévation et d'azimut peuvent être effectuées soit par méthode optique, soit par des méthodes radioélectriques :
- la méthode optique consiste à utiliser un télescope équipé d'une caméra permettant de photographier, par exemple, un satellite éclairé par le soleil, sur un fond d'étoiles. La position du satellite est repérée par des angles d'élévation et d'azimut calculés à partir des positions de ce satellite par rapport aux étoiles dont on connaît parfaitement les coordonnées. Cette méthode présente des contraintes puisque les prises de vue ne peuvent être effectuées que dans les périodes de début et de fin de nuit. Il est obligatoire que la nébulosité soit très faible et le dépouillement des mesures est très long,
- les méthodes radioélectriques consistent à utiliser une interférométrie ou à effectuer une mesure angulaire directe :
. la méthode utilisant une interférométrie consiste, à partir de la mesure des déphasages existant en tous les points d'un réseau d'antennes particulier, à restituer la direction d'où provient l'onde radioélectrique émise par une source dont on souhaite repérer les angles d'élévation et d'azimut. Cette direction étant repérée, l'antenne concernée peut alors être pointée vers la source ainsi repérée. Cette méthode nécessite un nombre imposant d'équipements (plusieurs antennes avec des équipements de traitement du signal associés),
. la méthode consistant à effectuer une mesure angulaire directe utilise une antenne directive montée sur un support pouvant se déplacer suivant deux axes orthogonaux, par exemple azimut et élévation. La mise en oeuvre de cette méthode est facile mais sa précision dépend de la précision des moyens mécaniques permettant de déplacer l'antenne.

Il ressort de la description de ces différentes méthodes, qu'il est nécessaire d'étalonner les mesures des angles d'élévation et d'azimut de l'axe radioélectrique d'une antenne, de manière à connaître pour chaque angle l'erreur angulaire commise sur les mesures de ces angles, afin de corriger la direction de l'antenne lorsque celle-ci est pointée sur un point de l'espace occupant des positions prédéterminées dans un repère fixe de référence.

Différentes méthodes d'étalonnage existent :
- il est connu par exemple d'utiliser un mât de collimation. C'est une méthode d'étalonnage très courante. Dans cette méthode, on utilise un pylône équipé à son sommet d'une balise radioélectrique dont la fréquence d'émission correspond à la fréquence de réception de l'antenne calibrée ou étalonnée. Ce pylône est aussi équipé d'une mire permettant sa localisation optique précise à partir de l'antenne. La mise en oeuvre est simple mais il n'est possible de calibrer ou d'étalonner l'orientation de l'antenne que lorsque le site est très bas avec toutes les sources d'erreurs que cela comporte, et notamment les erreurs dues aux réflexions multiples. Il n'est pas possible d'utiliser ce procédé pour calibrer ou étalonner une antenne à débattement limité,
- il est aussi possible d'étalonner les mesures des angles d'élévation et d'azimut de l'axe radioélectrique d'une antenne à l'aide de radiosources. Le défaut de ces radiosources est de présenter un diamètre apparent qui est généralement supérieur à la précision de mesure recherchée. En effet, le diamètre apparenté d'une radiosource est voisin de $2.10^{-3}$ radians alors que la précision recherchée lorsque l'on pointe une antenne sur un satellite géostationnaire est voisine de $5.10^{-4}$ radians. Cette méthode ne peut pas être utilisée pour une antenne à faible débattement, du fait que la probabilité de trouver une radiosource utilisable dans la diection de pointage de l'antenne est très faible,
- on peut également effectuer un étalonnage à partir d'un satellite. Il est nécessaire dans ce cas de trouver un satellite qui a une fréquence de balise identique ou très voisine de la fréquence de poursuite de l'antenne à étalonner. Il est de plus nécessaire de connaître la position du satellite avec une précision bien meilleure que la précision d'étalonnage recherchée. Enfin, pour une antenne à faible débattement, on est ramené au problème posé par une radiosource qui est celui de disposer d'un satellite dans la direction de pointage. Ce qui est rarement le cas.

L'invention a pour but de remédier aux inconvénients des dispositifs connus d'étalonnage des mesures des angles d'élévation et d'azimut de l'axe radioélectrique d'une antenne, et notamment de réaliser un ensemble d'étalonnage de ces angles qui soit bien plus précis que les dispositifs existants, qui ne nécessite pas la mise en oeuvre d'un matériel ou de calculs importants, qui permette d'étalonner avec grande précision des orientations d'antennes radioélectriques à faible débattement. La précision d'étalonnage obtenue bien inférieure à celle des dispositifs connus est inférieure à $5.10^{-6}$ radians.

L'invention a pour objet un ensemble d'étalonnage des angles d'élévation et d'azimut de l'axe radioélectrique d'une antenne, ces angles étant déterminés par des moyens de mesure, par rapport à un repère fixe de référence lié au sol portant l'antenne, cette antenne comportant des moyens d'émission et de réception et des moyens de commande de déplacement pour être pointée aux erreurs près d'élévation et d'azimut vers une position prédéterminée éloignée dans l'espace, repérée en élévation et azimut par rapport au repère de référence, et repérée en distance par rapport à l'antenne, caractérisé en ce qu'il comporte une cible mobile à distance de l'antenne, une caméra vidéo d'approche pour repérer la cible mobile, cette caméra d'approche étant mobile avec l'antenne et ayant un axe optique voisin de l'axe radioélectrique, un théodolite dont l'axe optique est rigoureusement dirigé selon l'élévation et l'azimut de la position prédéterminée, ce théodolite étant muni d'une lunette ayant un réticule à deux axes croisés de repérage de son axe optique, une caméra vidéo d'acquisition de l'image du réticule et des images fournies par la lunette, des moyens pour commander le guidage du déplacement de la cible pour que celle-ci se place à une distance prédéterminée de l'antenne, au voisinage de l'axe radioélectrique, les caméras d'approche et d'acquisition étant reliées aux moyens de commande de guidage du déplacement de la cible pour que celle-ci se place dans le champ optique du théodolite de sorte que l'image de la cible dans la lunette soit aussi proche que possible des axes du réticule, un émetteur d'ondes radioélectriques embarqué sur la cible et émettant à une fréquence correspondant à une fréquence de réception de l'antenne, le fonctionnement de cet émetteur étant déclenché lorsque l'image de la cible entre dans le champ optique de la caméra d'approche, les moyens de réception de l'antenne étant reliés aux moyens de commande du déplacement de cette antenne pour asservir la direction de l'axe radioélectrique sur la position de l'émetteur embarqué, et des moyens reliés aux moyens de commande de guidage du déplacement de la cible pour enregistrer pendant le fonctionnement de l'émetteur embarqué, les images de la cible par rapport aux axes du réticule et pour enregistrer les valeurs correspondantes des angles d'élévation et d'azimut fournis par les moyens de mesure, les erreurs de pointage en élévation et en azimut étant calculées à partir des valeurs des angles correspondants fournies par les moyens de mesure et à partir des coordonnées correspondantes des images de la cible par rapport aux axes du réticule.

Selon une autre caractéristique, la cible est un aéronef piloté, les moyens de commande de guidage du déplacement de la cible comprennent des moyens de mixage des signaux vidéo fournis par les caméras d'approche et d'acquisition et des moyens d'émission de ces signaux vidéo, reliés aux moyens de mixage, un récepteur vidéo à écran, embarqué sur l'aéronef, recevant les signaux fournis par les moyens d'émission et correspondant aux images fournies par les caméras d'approche et d'acquisition, le pilote de l'aéronef observant les images sur l'écran et commandant le déplacement de l'aéronef pour que celui-ci reste tout d'abord dans le champ optique de la caméra d'approche, puis pour que l'image de l'aéronef sur l'écran soit aussi proche que possible des axes du réticule, lorsque l'aéronef est dans le champ optique du théodolite.

Selon une autre caractéristique, la caméra d'approche est une caméra à grand champ et à zoom incorporé.

Selon une autre caractéristique, l'ensemble comporte une source lumineuse embarquée sur l'aéronef et visible par la caméra d'approche et par le théodolite, cette source facilitant la poursuite de l'aéronef par la caméra d'approche et le pointage de celui-ci par le théodolite.

Selon une autre caractéristique, l'ensemble comporte des moyens d'émission-réception radiophoniques au sol et à bord de l'aéronef.

Selon une autre caractéristique, l'aéronef est un hélicoptère.

Les caractéristiques et avantages de l'invention ressortiront mieux de la description qui va suivre, donnée en référence aux dessins annexés, dans lesquels :

- la figure 1 a déjà été décrite et représente un diagramme permettant de définir les angles d'élévation et d'azimut d'un point de l'espace vu d'un point au sol,

- la figure 2 représente schématiquement un ensemble d'étalonnage conforme à l'invention.

L'ensemble représenté sur la figure 2 permet d'étalonner les valeurs des angles d'élévation et d'azimut de l'axe radioélectrique R d'une antenne 1 qui doit être pointé par exemple vers une position prédéterminée de l'espace, éloignée de l'antenne. Cette position prédéterminée peut être par exemple celle d'un satellite géostationnaire (non représenté sur la figure).

Cette position peut être repérée par sa distance par rapport à l'antenne, ainsi que par ses angles d'élévation et d'azimut, dans un repère fixe de référence (décrit dans la figure 1) lié au sol 2 qui porte l'antenne, l'origine de ce repère correspondant à l'emplacement de l'antenne.

Les angles d'élévation et d'azimut de l'axe radioélectrique de l'antenne sont déterminés de façon connue par des moyens de mesure 3 reliés à des capteurs du mouvement de l'antenne (non représentés).

Cette antenne comporte aussi des moyens d'émission et de réception radioélectrique 4 constitués de façon connue, qui ne sont pas représentés en détail sur la figure. Des moyens de commande 5 qui sont eux aussi constitués de façon connue, permettent de déplacer l'antenne en élévation et en azimut pour que celle-ci soit pointée, aux erreurs près d'élévation et d'azimut, vers la position prédéterminée éloignée dans l'espace, repérée en élévation et en azimut, par les moyens de mesure 3.

L'ensemble d'étalonnage comporte une cible mobile 6, telle qu'un aéronef et plus particulièrement un hélicoptère. Cette cible est mobile à distance de l'antenne. L'ensemble comporte aussi une caméra vidéo d'approche 7, cette caméra d'approche permet de repérer la cible mobile ; elle est mobile avec l'antenne. Elle est solidaire de celle-ci et son axe optique $O_1$ est très voisin de l'axe radioélectrique R de l'antenne. Cette caméra d'approche est de type "à grand champ et zoom incorporé". Elle permet, comme on le verra plus loin en détail de suivre l'évolution de l'hélicoptère lorsque celui-ci partant du sol 2 se déplace pour venir se placer à une certaine distance de l'antenne, dans une position sensiblement voisine de l'axe radioélectrique R.

L'ensemble d'étalonnnage comporte aussi un théodolite 8 dont l'axe optique $O_2$ est rigoureusement dirigé selon l'élévation et l'azimut de la position prédéterminée à pointer (satellite géostationnaire par exemple). Ce théodolite est muni d'une lunette 9 ayant un réticule à deux axes croisés de repérage de son axe optique. Une caméra vidéo d'acquisition 10 permet de saisir les images du réticule ainsi que les images fournies par la lunette, ainsi qu'on le verra plus loin en détail. En fait, le théodolite fournit des images de l'hélicoptère 6 lorsque celui-ci se situe au voisinage de l'axe optique $O_2$.

L'ensemble d'étalonnage comporte aussi des moyens de commande 11, 12 de guidage du déplacement de la cible, qui seront décrits plus loin en détail; ces moyens de commande de guidage permettent de guider le déplacement de l'hélicoptère pour que celui-ci se place, à une distance prédéterminée de l'antenne, au voisinage de l'axe radioélectrique R. Ces moyens de commande de guidage comportent notamment un récepteur vidéo 12 embarqué à bord de l'hélicoptère, dont le rôle sera décrit plus loin en détail.

Les moyens de commande 11 sont reliés aux caméras d'approche et d'acquisition 7, 10 ; ils permettent de guider grâce au récepteur viéo embarqué 12, le déplacement de l'hélicoptère pour que le pilote place celui-ci dans le champ du théodolite, de sorte que son image dans la lunette soit aussi proche que possible des axes du réticule.

Un émetteur 13 d'ondes radioélectriques est embarqué sur la cible. Il émet à une fréquence correspondant à la fréquence de réception de l'antenne 1.

Les moyens de réception 4 de l'antenne 1 sont reliés aux moyens de commande de déplacement 5 de l'antenne, pour asservir la direction de l'axe radioélectrique R sur la position de l'émetteur embarqué 13, lorsque celui-ci émet des signaux radioélectriques.

Des moyens d'enregistrement 18 sont reliés aux moyens de commande 11 de déplacement de la cible pour enregistrer, comme on le verra plus loin en détail, l'image de la cible par rapport aux axes du réticule (cette image étant fournie par la caméra d'acquisition 10) et pour enregistrer les valeurs correspondantes des angles d'élévation et d'azimut fournis par les moyens de mesure 3.

Les erreurs de pointage de l'antenne en élévation et en azimut sont calculées à partir des valeurs des angles correspondants fournis par les moyens de mesure 3, et à partir des coordonnées correspondantes des images de la cible par rapport aux axes du réticule.

Les moyens d'enregistrement comprennent une caméra vidéo de mesure 15 reliée aux moyens de commande 11 et dirigée vers les moyens de mesure à affichage numérique 3. Ces moyens de mesure fournissent dans une première zone 16, la valeur numérique de l'angle d'azimut par exemple, et dans une deuxième zone 17, la valeur numérique de l'angle d'élévation. Les moyens d'enregistrement comportent aussi un magnétoscope 18 relié aux moyens de commande 11.

Les moyens de commande 11 comportent des moyens de mixage de signaux vidéo 19, reliés aux caméras d'approche, d'acquisition et de mesure 7, 10, 15, ainsi qu'au magnétoscope 18. Ces moyens de mixage sont aussi reliés à un émetteur vidéo 19.

Le magnétoscope 18 enregistre, dès le déclenchement de l'émetteur embarqué 13, les images fournies par la caméra 10 du réticule 28 de la lunette 9 du théodolite, les images 6A de l'hélicoptère 6, ainsi que les images 16A, 17A des valeurs numériques des angles d'élévation et d'azimut fournies par la caméra de mesure 15. Ce magnétoscope peut être relié à un récepteur vidéo à écran de contrôle 21, sur lequel ces images apparaissent au cours de l'étalonnage, mais aussi comme on le verra plus loin en détail, au moment du dépouillement des mesures. Le récepteur vidéo embarqué 12 reçoit les mêmes images. l'émetteur vidéo 20 fournit en effet des signaux vidéo correspondant aux images fournies par les caméras d'approche 7 et d'acquisition 10. Ces signaux sont captés par une antenne embarquée 22 pour être transmis au récepteur vidéo 12 des moyens de commande de guidage de déplacement.

L'ensemble d'étalonnage comprend aussi des moyens d'émission-réception radiophoniques 23, 24, au sol et à bord de l'hélicoptère, pour permettre un échange radiophonique entre un opérateur au sol et le pilote de l'hélicoptère, notamment pour guider le pilote vers la position à atteindre, pendant une phase d'approche.

Enfin, l'ensemble de commande de guidage comporte une source lumineuse 25, embarquée sur l'hélicoptère, visible par les caméras d'approche et d'acquisition. Cette source lumineuse facilite la poursuite de l'aéronef ou de l'hélicoptère par la caméra d'approche, ainsi que le repérage de l'hélicoptère dans la lunette du théodolite.

L'ensemble qui vient d'être décrit fonctionne de la manière suivante :

On souhaite pointer l'antenne 1 dans une direction R de l'espace (celle d'un satellite géostationnaire dont on connaît la distance ainsi que les angles d'élévation et d'azimut) par rapport à l'antenne. L'antenne est placée dans une position telle que la direction de son axe radioélectrique R soit voisine, en élévation et en azimut de celle du satellite à pointer avec précision. Le positionnement de l'antenne dans cette direction est effectué grâce aux moyens de commande et de déplacement 5 ; les angles d'élévation et d'azimut sont repérés aux erreurs près, par les moyens de mesure 3. Le théodolite 8, qui est un appareil très précis, est orienté avec grande précision, dans la direction (repérée en élévation et en azimut, par rapport au repère de référence défini plus haut) du satellite avec lequel l'antenne devra ultérieurement échanger des signaux radioélectriques. Les caméras sont déclenchées et l'hélicoptère qui était au sol, décolle, dirigé par le pilote qui peut communiquer avec un opérateur au sol grâce aux moyens d'émission-réception 23, 24, en radiophonie. Le pilote connaît la direction (en azimut et en élévation) et la distance par rapport à l'antenne, du point de mesure dans l'espace aérien où doit être placé l'hélicoptère pour se situer sur l'axe optique du théodolite 8. Ce point annexe est en fait rigoureusement situé sur la direction antenne-satellite. La distance de l'hélicoptère à l'antenne est en fait repérée de façon connue, par l'altitude de cet hélicoptère. En effet, si on connaît l'angle d'élévation par rapport à l'antenne, du point annexe à atteindre, il suffit pour se placer à une distance prédéterminée de l'antenne, de se placer à une altitude prédéterminée, pour l'angle d'élévation considéré. En fait, si l'antenne est une parabole de diamètre D, la distance de l'hélicopère par rapport à l'antenne doit être supérieure à $2D_2/\lambda$, $\lambda$ désignant la longueur d'onde des signaux émis par l'hélicoptère en direction de l'antenne. Cette condition est nécessaire pour une bonne réception par l'antenne, des ondes radioélectriques émises par l'émetteur embarqué 13.

L'hélicoptère qui rejoint le point annexe prédéterminé de l'espace aérien, repéré en distance, en élévation et en azimut, entre alors dans le champ de la caméra d'approche 7. Cette caméra est une caméra à grand champ et à zoom incorporé. Le repérage de l'hélicoptère est facilité par la source lumineuse 25. Lorsque l'hélicoptère entre dans le champ de la caméra d'approche 7, l'émetteur embarqué 13 émet des signaux radioélectriques. Ces signaux sont reçus par les moyens de réception 4 qui permettent, en liaison avec les moyens de commande de déplacement 5, d'asservir la position de l'antenne en élévation et en azimut, pour que l'axe radioélectrique R soit constamment dirigé vers l'antenne émettrice de l'émetteur embarqué 13. Le pilote reçoit, sur le récepteur vidéo 12, les images de l'hélicoptère fournies par la caméra d'approche 7 ; ces images sont fournies par l'intermédiaire des moyens de mixage 19 et de l'émetteur vidéo 20. Lorsque l'hélicoptère atteint une position voisine du point annexe prédéterminé (repéré en distance, en élévation et en azimut) par rapport à l'antenne, l'image de l'hélicoptère peut alors être vue dans la lunette 9 du théodolite 8. La caméra 10 filme ces images de l'hélicoptère, dans la lunette du théodolite, ainsi que l'image du théodolite. Ces images sont transmises au récepteur vidéo 12 embarqué à bord de l'hélicoptère par l'intermédiaire des moyens de mixage 19 et de l'émetteur vidéo 20. Elles sont simultanément enregistrées par le magnétoscope 18. Le magnétoscope enregistre aussi simultanément les valeurs correspondantes des angles d'élévation et d'azimut de l'antenne, fournies par les moyens de mesure 3, filmés par la caméra 15. Le pilote voit alors sur le récepteur vidéo à écran 12, l'image de l'hélicoptère par rapport au réticule, ainsi que les valeurs des angles d'élévation et d'azimut. Ces images sont comparables à celles qui seront vues par la suite lors de la lecture de la bande d'enregistrement du magnétoscope 18, sur l'écran du récepteur vidéo 21. On distingue sur cet écran l'image 6A de l'hélicoptère, l'image 28 des axes du réticule, ainsi que les images 16A, 17A des valeurs numériques affichées par les moyens de mesure 3. Ces valeurs correspondent aux valeurs des angles d'élévation et d'azimut. Compte tenu de l'image de l'hélicoptère sur l'écran du récepteur embarqué 12, le pilote guide l'hélicoptère pour que son image sur l'écran du récepteur vidéo 12 soit aussi proche que possible des axes du réticule. En effet, le point de croisement de ces axes détermine l'axe optique $O_2$ de la lunette 9 du théodolite 8 et donc la direction exacte du satellite que l'antenne doit pointer. Ces images successives ainsi que les valeurs correspondantes des angles d'élévation et d'azimut de l'antenne ayant été enregitrées sur la bande du magnétoscope 18, l'hélicoptère peut alors regagner sa base.

Les opérateurs au sol peuvent alors effectuer des calculs d'erreur sur les angles d'élévation et d'azimut de l'antenne, grâce aux données résultant du dépouillement des images enregistrées sur la bande du magnétoscope. En effet, on connaît pour chaque image, la position exacte (coordonnées X, Y) de l'image de l'hélicoptère par rapport aux axes du réticule. Il est donc possible à partir de ces coordonnées de l'image de l'hélicoptère par rapport aux axes du réticule, de calculer l'angle entre la direction de référence définie par l'axe $O_2$ du théodolite et la direction de l'axe radioélectrique R de l'antenne. La direction de référence est définie par le point d'intersection des axes du réticule tandis que la direction de l'axe radioélectrique est définie par les coordonnées X, Y de son image sur l'écran. Il est donc possible de calculer avec exactitude les valeurs des angles d'élévation et d'azimut de l'antenne par rapport au repère de référence.

Pour chaque image sont indiquées en 16A, 17A, les valeurs des angles d'élévation et d'azimut fournies par les moyens de mesure 3. Une comparaison entre les valeurs de référence des angles d'élévation et d'azimut calculées comme on l'a indiqué plus haut (à partir des coordonnées X,Y de l'aéronef par rapport aux axes du réticule), et les valeurs indiquées par les moyens de mesure permet d'obtenir les corrections d'angles à effectuer pour obtenir le positionnement de l'antenne, en élévation et en azimut, pour que celle-ci puisse être pointée avec une très grande exactitude sur le satellite géostationnaire dans l'espace. Il est ainsi possible d'étalonner les moyens de mesure 3 d'élévation et d'azimut avec une très grande précision, puisque l'antenne peut, grâce à cet ensemble, être pointée en élévation et en azimut, avec des erreurs d'angles inférieures à 50 microradians.

Le théodolite est placé aussi près que possible du centre de rotation de l'antenne pour minimiser les erreurs de parallaxe entre l'axe radioélectrique de l'antenne et l'axe optique du théodolite. Des calculs trigonométriques simples et à la portée de l'homme de l'art permettent de calculer cette erreur de parallaxe.

L'ensemble qui vient d'être décrit permet d'orienter une antenne avec une précision bien plus grande que celle obtenue par les systèmes connus décrits plus haut.

## Revendications

1. Ensemble d'étalonnage des angles d'élévation ($\beta$) et d'azimut ($\theta$) de l'axe radioélectrique (R) d'une antenne (1), ces angles étant déterminés par des moyens de mesure (3), par rapport à un repère fixe de référence (O, N, X) lié au sol (2) portant l'antenne, cette antenne comportant des moyens d'émission et de réception (4) et des moyens de commande de déplacement (5) pour être pointée aux erreurs près d'élévation et d'azimut vers une position prédéterminée (P) éloignée dans l'espace, repérée en élévation et azimut par rapport au repère de référence, et repérée en distance par rapport à l'antenne (1), caractérisé en ce qu'il comporte une cible mobile (6) à distance de l'antenne (1), une caméra vidéo d'approche (7) pour repérer la cible mobile (6), cette caméra d'approche étant mobile avec l'antenne et ayant un axe optique ($O_2$) voisin de l'axe radioélectrique (R), un théodolite (8) dont l'axe optique ($O_2$) est rigoureusement dirigé selon l'élévation ($\beta$) et l'azimut ($\theta$) de la position prédéterminée (P), ce théodolite étant muni d'une lunette (9) ayant un réticule à deux axes croisés de repérage de son axe optique, une caméra vidéo d'acquisition (10) de l'image du réticule et des images fournies par la lunette, des moyens (11, 12, 13, 25) pour commander le guidage du déplacement de la cible (6) pour que celle-ci se place à une distance prédéterminée de l'antenne, au voisinage de l'axe radioélectrique (R), les caméras d'approche et d'acquisition (7, 10) étant reliées aux moyens de commande de guidage (11) du déplacement de la cible pour que celle-ci se place dans le champ optique du théodolite (8) de sorte que l'image de la cible dans la lunette (9) soit aussi proche que possible des axes du réticule, un émetteur d'ondes radioélectriques (13) embarqué sur la cible (6) et émettant à une fréquence correspondant à une fréquence de réception de l'antenne, le fonctionnement de cet émetteur étant déclenché lorsque l'image de la cible entre dans le champ optique de la caméra d'approche (7), les moyens de réception (4) de l'antenne étant reliés aux moyens (5) de commande du déplacement de cette antenne pour asservir la direction de l'axe radioélectrique (R) sur la position de l'émetteur embarqué (13), et des moyens (18) reliés aux moyens de commande de guidage du déplacement de la cible pour enregistrer pendant le fonctionnement de l'émetteur embarqué, les images (6A) de la cible par rapport aux axes du réticule et pour enregistrer les valeurs correspondantes (16, 17) des angles d'élévation et d'azimut fournis par les moyens de mesure (3), les erreurs de pointage en élévation et en azimut étant calculées à partir des valeurs des angles correspondants fournies par les moyens de mesure et à partir des coordonnées (X, Y) correspondantes des images de la cible par rapport aux axes du réticule.

2. Ensemble d'étalonnage selon la revendication 1, caractérisé en ce que la cible (6) est un aéronef piloté, les moyens (11) de commande de guidage du déplacement de la cible comprennent des moyens de mixage (19) des signaux vidéo fournis par les caméras d'approche et d'acquisition (7, 10) et des moyens (20) d'émission de ces signaux vidéo, reliés aux moyens de mixage (19), un récepteur vidéo à écran (12), embarqué sur l'aéronef, recevant les signaux fournis par les moyens d'émission (20) et correspondant aux images fournies par les caméras d'approche et d'acquisition, le pilote de l'aéronef observant les images sur l'écran et commandant le déplacement de l'aéronef pour que celui-ci reste tout d'abord dans le champ optique de la caméra d'approche (7), puis pour que l'image de l'aéronef sur l'écran soit aussi proche que possible des axes du réticule, lorsque l'aéronef est dans le champ optique du théodolite (8).

3. Ensemble d'étalonnage selon la revendication 2, caractérisé en ce que les moyens pour enregistrer les valeurs des angles d'élévation et d'azimut fournis par les moyens de mesure comprennent une caméra de mesure (15) dirigée vers les moyens de mesure (3) à affichage numérique, cette caméra étant reliée aux moyens de mixage (19) et un magnétoscope (18) relié aux moyens de mixage (19) pour enregistrer les valeurs numériques des angles d'élévation et d'azimut fournis par les moyens de mesure (3), et pour enregistrer les images correspondantes du réticule et de la cible, fournis par la caméra d'acquisition (10).

4. Ensemble d'étalonnage selon la revendication 3, caractérisé en ce que la caméra d'approche (7) est une caméra à grand champ et à zoom incorporé.

5. Ensemble d'étalonnage selon la revendication 4, caractérisé en ce que les moyens de commande de guidage comportent en outre une source lumineuse (25) embarquée sur l'aéronef (6) et visible par la caméra d'approche (7) et par le théodolite (8), cette source facilitant la poursuite de l'aéronef par la caméra d'approche (7) et le pointage de celui-ci par le théodolite (8)

6. Ensemble étalonnage selon la revendication 4, caractérisé en ce qu'il comporte des moyens d'émission-réception (23, 24) radiophoniques au sol (2) et à bord de l'aéronef (6).

7. Ensemble d'étalonnage selon la revendication 4, caractérisé en ce que l'aéronef (6) est un hélicoptère.

## Claims

1. Means for calibrating the elevation ($\beta$) and azimuth ($\theta$) angles of the scan axis (R) of an antenna (1), said angles being determined by measuring means (3) with respect to a fixed reference mark (O, N, X) linked with the ground (2) carrying the antenna, said antenna having transmission and reception means (4) and displacement control means (5), so that it can be pointed, excepting the elevation and azimuth errors, towards a predetermined remote position (P) in space, designated in elevation and azimuth with respect to the reference mark and designated in distance with respect to the antenna (1), characterized in that it comprises a mobile target (6) remote from the antenna (1), a video approach camera (7) for detecting the mobile target (6), said approach camera being mobile with the antenna and having an optical axis ($O_1$) close to the radio axis (R), a theodolite (8) whose optical axis ($O_2$) is strictly directed in accordance with the elevation (β) and azimuth (θ) of the predetermined position (P), said theodolite being provided with a telescope (9) having a reticule with two crossed axes for designating its optical axis, with two crossed marking axes of its optical axis, a video camera (10) for the acquisition of the image of the reticule and images supplied by the telescope, means (11, 12, 13, 25) for controlling the guidance of the displacement of the target (6), so that the latter is positioned at a predetermined distance from the antenna in the vicinity of the scan axis (R), the approach and acquisition cameras (7, 10) being connected to guidance control means (11) of the displacement of the target, so that the latter is positioned in the optical field of the theodolite (8), in such a way that the image of the target in the telescope (9) is as close as possible to the axes of the reticule, a radio wave transmitter (13) on-board the target (6) and transmitting at a frequency corresponding to the antenna reception frequency, the operation of said transmitter being initiated when the image of the target enters the optical field of the approach camera (7), the antenna reception means (4) being connected to means (5) for the control of the displacement of said antenna, so that the direction of the scan axis is made dependent on the position of the on-board transmitter (13) and means (18) connected to the guidance control means of the target displacement for recording during the operation of the on-board transmitter, the images (6A) of the target with respect to the axes of the reticule and for recording the corresponding values (16, 17) of the elevation and azimuth angles supplied by the measuring means (3), the pointing errors in elevation and in azimuth being calculated from values of corresponding angles supplied by the measuring means and from corresponding coordinates (X, Y) of the images of the target with respect to the axes of the reticule.

2. Calibrating means according to claim 1, characterized in that the target (6) is a piloted aircraft, the guidance control means (11) of the target displacement comprising means (19) for mixing the video signals supplied by the approach and acquisition cameras (7, 10) and means (20) for transmitting said video signals, connected to the mixing means (19), a video receiver (12) with screen on-board the aircraft receiving the signal supplied by the transmission means (20) and corresponding to the images supplied by the approach and acquisition cameras, the pilot of the aircraft observing the images on the screen and controlling the displacement of the aircraft so that the latter firstly remains in the optical field of the approach camera (7) and then so that the image of the aircraft on the screen is as close as possible to the axes of the reticule, when the aircraft is in the optical field of the theodolite (8).

3. Calibrating means according to claim 2, characterized in that the means for recording the values of the elevation and azimuth angles supplied by the measuring means comprise a measuring camera (15) directed towards the digital display measuring means (3), said camera being connected to mixing means (19) and to a magnetoscope (18), connected to the mixing means (19) for recording the numerical values of the elevation and azimuth angles supplied by the measuring means (3) and for recording the corresponding images of the reticule and the target supplied by the acquisiton camera (10).

4. Calibrating means according to claim 3, characterized in that the approach camera (7) is of the wide-angled, incorporated zoom type.

5. Calibrating means according to claim 4, characterized in that the guidance control means also comprise a light source (25) on board the aircraft (6) and visible to the approach camera (7) and theodolite (8), said facilitating the tracking of the aircraft by the approach camera (7) and the pointing thereof by the theodolite (98).

6. Calibrating means according to claim 4, characterized in that it comprises radiophonic transmission – reception means (23, 24) on the ground (2) and on board the aircraft (6).

7. Calibrating means according to claim 4, characterized·in that the aircraft (6) is a helicopter.

**Patentansprüche**

1. Einheit zur Eichung des Elevations- (β) und Azimutwinkels (θ) der radioelektrischen Achse (R) einer Antenne (1), wobei diese Winkel mittels einer Meßvorrichtung (3) bezüglich einem festen, mit dem Boden (2), der die Antenne trägt, verbundenen Bezugssystem (O, N, X) bestimmt werden, wobei die Antenne eine Sende- und Empfangsvorrichtung (4) und eine Steuervorrichtung (5) zum Verstellen aufweist, um nach den Elevations- und Azimutfehlern auf eine im Raum entfernte Position (P) ausgerichtet zu werden, die in der Elevation und im Azimut bezüglich eines Bezugssystems bezogen ist und in der Entfernung bezüglich der Antenne (1) bezogen ist, dadurch gekennzeichnet, daß sie in der Entfernung der Antenne (1) aufweist: ein bewegliches Ziel (6); eine Annäherungsvideokamera (7), zum Erfassen des beweglichen Ziels (6), wobei diese Kamera mit der Antenne beweglich ist und eine zur radioelektrischen Achse R benachbarte optische Achse ($O_1$) besitzt; einen Theodoliten (8), dessen optische Achse ($O_2$) starr entsprechend dem Elevations- (β) und Azimutwinkel (θ) der vorgegebenen Position (P) ausgerichtet ist, wobei der Theodolit mit einem Fernrohr (9) mit einem Fadenkreuz mit zwei gekreuzten Bezugsachsen zu seiner optischen Achse versehen ist; eine Videokamera (10) zum Erfassen des Fadenkreuzbildes und der von dem Fernglas erzeugten Bilder; eine Steuerungsvorrichtung (11, 12, 13, 25) zum Führen der Bewegung des Ziels (6), damit sich dieses an einem vorgegebenen Abstand von der Antenne anordnet, in der Nähe der radioelektrischen Achse (R), wobei die Annäherungs- und die Erfassungskamera (7, 10) mit der Steuerungsvorrichtung (11) zum Führen der Bewegung des Ziels verbunden sind, damit sich dieses derart im Bildfeld des Theodoliten (8) anordnet, daß das Bild des Ziels im Fernglas (9) so nahe wie möglich an den Achsen des Fadenkreuzes ist; einen Sender (13) für radioelektrische Wellen, der auf dem Ziel (6) aufgeladen ist und mit einer der Empfangsfrequenz der Antenne entsprechenden Frequenz sendet, wobei das Arbeiten dieses Senders ausgelöst wird sobald das Bild des Ziels in das Bildfeld der Annäherungskamera eintritt, wobei die Empfangsvorrichtung (4) der Antenne mit der Steuerungsvorrichtung (5) zum Verstellen dieser Antenne verbunden ist, um die Richtung der radioelektrischen Achse (R) auf die Position des aufgeladenen Senders (13) auszurichten; und eine Vorrichtung (18), die mit der Steuerungsvorrichtung zum Führen des Verstellens des Ziels verbunden ist, um während des Arbeitens des aufgeladenen Senders die Bilder (6A) des Ziels bezüglich der Fadenkreuzachsen aufzunehmen und entsprechende durch die Meßvorrichtung (3) erzeugten Werte (16, 17) des Elevations- und Azimutwinkels aufzunehmen, wobei die Ausrichtungsfehler hinsichtlich des Elevations- und Azimutwinkels ausgehend von den entsprechenden, von der Meßvorrichtung erzeugten Winkelwerten und von den den Bildern des Ziels bezüglich der Fadenkreuzachse entsprechenden Koordinaten (X, Y) berechnet werden.

2. Einheit zur Eichung nach Anspruch 1, dadurch gekennzeichnet, daß das Ziel (6) ein bemanntes Luftfahrzeug ist, daß die Steuervorrichtung (11) zum Führen der Bewegung des Ziels eine Vorrichtung (19) zum Mischen der von der Annäherungs- und der Erfassungskamera (7, 10) erzeugten Videosignale und eine Vorrichtung (20) zum Senden dieser Videosignale aufweist, die mit der Mischvorrichtung verbunden ist, wobei ein Videoempfangsschirm (12) in dem Luftfahrzeug die durch die Sendevorrichtung (20) gesendeten und den von der Annäherungs- und der Erfassungskamera erzeugten Bilder entsprechenden Signale empfängt, wobei der Pilot des Luftfahrzeugs die Bilder auf dem Schirm beobachtet und die Bewegung des Luftfahrzeugs so steuert, daß dieses zunächst im Bildfeld der Annäherungskamera (7) bleibt und daß dann das Bild des Luftfahrzeugs auf dem Schirm so nahe wie möglich an den Fadenkreuzachsen ist, wenn das Luftfahrzeug im Bildfeld des Theodoliten (8) ist.

3. Einheit zur Eichung nach Anspruch 2, dadurch gekennzeichnet, daß die Vorrichtung zum Aufnehmen der durch die Meßvorrichtung erzeugten Werte des Elevations- und des Azimutwinkels eine Meßkamera (15) umfaßt, die auf die Meßvorrichtung (3) mit numerischer Anzeige gerichtet ist, diese Kamera ist mit der Mischvorrichtung (19) und einem mit der Mischvorrichtung (19) verbundenen Magnetoskop (18) zum Erzeugen numerischer Werte für den Elevations- und den Azimutwinkel, die durch Meßvorrichtung (3) erzeugt werden, und zum Aufnehmen der entsprechenden, durch die Erfassungskamera (10) erzeugten Bilder des Fadenkreuzes und des Ziels verbunden.

4. Einheit zur Eichung nach Anspruch 3, dadurch gekennzeichnet, daß die Annäherungskamera (7) eine Kamera mit großem Bildfeld und integriertem Zoom ist.

5. Einheit zur Eichung nach Anspruch 4, dadurch gekennzeichnet, daß die Steuervorrichtung zum Führen außerdem eine auf dem Luftfahrzeug (6) befindliche und für die Annäherungskamera (7) und den Theodoliten (8) sichtbare Lichtquelle (25) aufweist, wobei diese Lichtquelle die Verfolgung des Luftfahrzeugs durch die Annäherungskamera (7) und das Ausrichten dieser durch den Theodoliten (8) vereinfacht.

6. Einheit zur Eichung nach Anspruch 4, dadurch gekennzeichnet, daß sie eine Radiosende- und empfangsanlage (23, 24) am Boden (2) und an Bord des Luftfahrzeugs (6) aufweist.

7. Einheit zur Eichung nach Anspruch 4, dadurch gekennzeichnet, daß das Luftfahrzeug (6) ein Hubschrauber ist.

FIG. 2

FIG. 1

EP 0 237 433 B1